Europäisches Patentamt

(19) European Patent Office

Office européen des brevets

(11) Numéro de publication: **0 100 292**
**B1**

(12) **FASCICULE DE BREVET EUROPEEN**

(45) Date de publication du fascicule du brevet: **28.11.90**

(21) Numéro de dépôt: **83440039.2**

(22) Date de dépôt: **07.07.83**

(51) Int. Cl.⁵: **A 01 D 78/10**

(54) **Machine de fenaison perfectionnée.**

(30) Priorité: **08.07.82 FR 8212159**

(43) Date de publication de la demande:
**08.02.84 Bulletin 84/06**

(45) Mention de la délivrance du brevet:
**28.11.90 Bulletin 90/48**

(84) Etats contractants désignés:
**AT DE GB IT NL**

(56) Documents cités:
**FR-A-2 465 403**
**GB-A-2 065 435**
**GB-A-2 065 436**

(73) Titulaire: **BELRECOLT S.A.**
**3, Zone Industrielle**
**F-67440 Marmoutier (FR)**

(72) Inventeur: **Aron, Jérôme**
**3, Rue des Comtes de Rosen Dossenheim-sur-Zinsel**
**F-67330 Bouxwiller (FR)**
Inventeur: **Quirin, Michel**
**29, Rue de la Bergerie Allenwiller**
**F-67310 Wasselonne (FR)**

(74) Mandataire: **Andres, Jean-Claude**
**BELRECOLT S.A. 3, Zone Industrielle**
**F-67440 Marmoutier (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 100 292 B1

## Description

La présente invention se rapporte à une machine de fenaison pour l'andainage de fourrage ou le déplacement d'andains ou le fanage, comportant au moins un tambour entraîné en rotation autour d'un axe sensiblement vertical ou incliné, lequel tambour porte à sa base, pour la préhension du fourrage, une jupe souple de forme tronçonique dont la face supérieure est munie de nervures courbes, et comporte sur sa périphérie des entraîneurs recourbés dans le même sens que les nervures et qui coopèrent avec la jupe en vue du déplacement du fourrage, lesdits entraîneurs étant fixés rigidement sur sa paroi et étant disposés sur plusieurs niveaux.

Une machine de ce genre est décrite dans la demande de certificat d'addition FR—A—2 465 403. Sur les tambours de cette machine, les entraîneurs du niveau inférieur sont légèrement dirigés vers le bas et forment des angles aigus avec la jupe du tambour correspondant. Durant le travail se produisent fréquemment des bourrages au niveau de ces entraîneurs inférieurs. En effet, le fourrage qui est transporté sur la face supérieure de la jupe glisse sous lesdits entraîneurs et reste coincé entre ces derniers et ladite jupe. Ces bourrages empêchent le déplacement normal du fourrage. L'utilisateur est alors obligé d'intervenir manuellement pour retirer le fourrage coincé. Cette opération est très fastidieuse du fait qu'elle nécessite à chaque fois une interruption du travail.

D'autre part, lesdits entraîneurs ne coopèrent pas assez efficacement avec les jupes des tambours pour le déplacement du fourrage. En raison de leur forme ils ne déplacent pas non plus le fourrage à la même vitesse que les jupes. En conséquence, lorsque le fourrage est très dense, il arrive souvent qu'il s'accumule à l'avant des tambours et passe en partie par-dessus ces tambours.

La présente invention a notamment pour but d'améliorer le déplacement du fourrage par les tambours.

Ceci est obtenu selon l'invention par le fait que au moins les entraîneurs les plus rapprochés de la jupe d'un tambour sont sensiblement parallèles à cette jupe durant le fonctionnement et que la cambrure de ces entraîneurs est sensiblement identique à celle des nervures de la face supérieure de la jupe.

Grâce au parallélisme entre les entraîneurs et la jupe du tambour correspondant, le fourrage déplacé qui pénètre entre ces entraîneurs et ladite jupe n'est plus coincé. Il peut donc se dégager de lui-même dans la zone de transfert. De par leur orientation lesdits entraîneurs rabattent le fourrage vers le bas et le maintiennent dans la zone d'influence de la jupe du tambour correspondant. En sus, en raison de leurs cambrures pratiquement identiques, les entraîneurs et les nervures de la face supérieure de la jupe assurent ensemble un déplacement très régulier du fourrage. En pratique, l'action des entraîneurs sur le fourrage est pareille que celle desdites nervures.

Les entraîneurs de chaque tambour de la machine ont avantageusement une section circulaire. Ils ne présentent ainsi aucune arête à laquelle le fourrage pourrait rester accroché.

Selon une autre caractéristique chaque entraîneur comporte une plaque de fixation courbée de manière à épouser la forme du tambour correspondant. Ces plaques peuvent être bien appliquées contre la paroi dudit tambour, ce qui assure une bonne stabilité aux entraîneurs, même lorsque le fourrage à déplacer est lourd.

D'autres caractéristiques et avantages de l'invention ressortiront de la description ci-après avec référence aux dessins annexés qui représentent, à titre d'exemple non limitatif, un mode de réalisation de l'invention.

Dans ces dessins:

La figure 1 représente une vue d'ensemble d'une machine selon l'invention en position d'andainage latéral,

La figure 2 représente à plus grande échelle un tambour de cette machine,

La figure 3 représente une vue de dessus suivant le plan de coupe III-III de la figure 2.

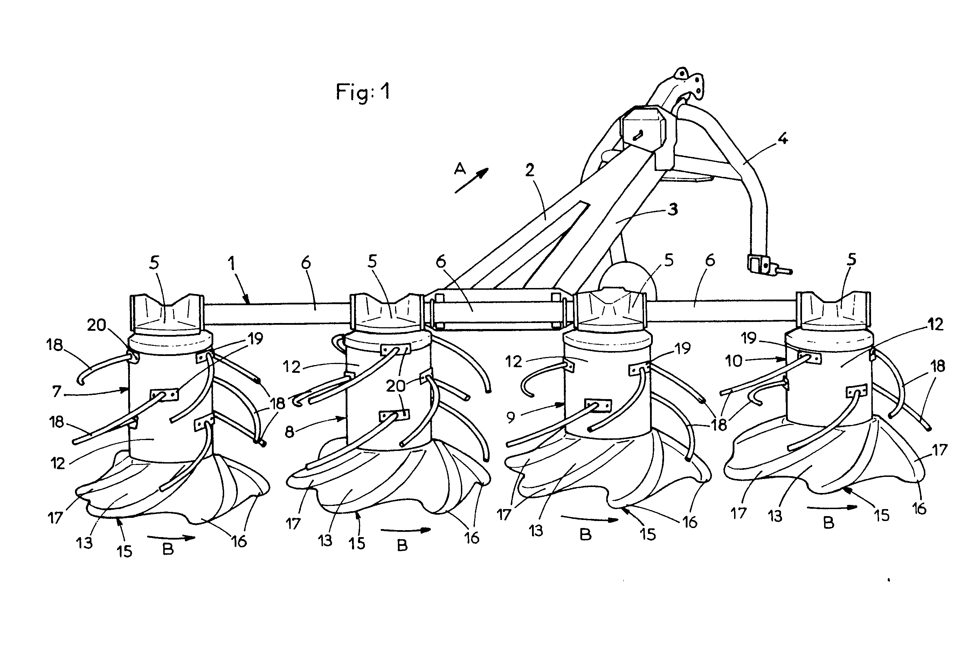

Telle qu'elle est représentée sur la figure 1, la machine selon l'invention comprend un châssis support (1) de forme allongée. A ce châssis sont reliées deux poutres (2 et 3) disposées en forme de V, à l'extrémité desquelles est articulé un chevalet d'attelage trois points (4). Celui-ci permet l'accouplement de la machine à un tracteur d'entraînement non représenté, qui permet de la déplacer dans le sens de la flèche (A).

Ledit châssis (1) est constitué par quatre boîtiers (5) reliés entre eux au moyen de tubes (6). Il est en sus muni de quatre tambours (7, 8, 9 et 10) montés libres en rotation sur des axes (11) solidaires du châssis (1). Chacun de ces axes (11) comporte à sa partie inférieure une roue ou un patin servant d'appui à la machine lorsqu'elle est déplacée ou déposée sur le sol.

Dans la position représentée sur la figure 1 le châssis support (1) est disposé obliquement par rapport à la direction d'avancement (A). Cette disposition favorise la transmission du fourrage d'un tambour à l'autre en vue de la réalisation d'un andain sur le côté du tambour (7) situé à l'extrémité la plus en arrière.

Durant le travail ces quatre tambours (7 à 10) sont entraînés en rotation autour des axes (11) dans le même sens. Ce sens de rotation est indiqué par les flèches (B).

Ces axes (11) peuvent être sensiblement verticaux ou légèrement inclinés vers l'avant, dans la direction du sens d'avancement (A) de la machine.

Ledit entraînement en rotation des tambours (7 à 10) est réalisé au moyen d'un arbre logé dans le châssis (1). Pour cela cet arbre comporte dans chaque boîtier (5) un pignon conique qui coopère avec une couronne dentée solidaire du tambour (7, 8, 9 ou 10) correspondant. Ledit arbre est lui-même entraîné d'une manière connue en soi à partir de l'arbre de prise de force du tracteur d'entraînement.

Les parois (12) de ces tambours (7 à 10) sont rigides. Elles peuvent être réalisées par exemple en tôle ou en matière plastique rigide. Chaque tambour (7 à 10) porte à sa partie inférieure une jupe souple (13) de forme tronconique. Ces jupes (13) peuvent être en caoutchouc, en matière plastique ou une autre matière analogue. Leur fixation sur les tambours (7 à 10) peut être réalisée au moyen de rivets (14). Durant le travail elles plongent sous le fourrage, tout en épousant bien les dénivellations du sol, et déplacent le fourrage sur leur face supérieure. Leur bord extérieur (15) présente des protubérances (16) facilitant la préhension du fourrage. Cette préhension est également facilitée par l'inclinaison vers l'avant des tambours (7 à 10). En effet, cette inclinaison permet d'avoir un meilleur contact des jupes (13) avec le sol dans la partie avant de leur trajectoire. En sus, la face supérieure de ces jupes (13) est munie de nervures courbes (17) pour favoriser l'entraînement du fourrage.

Le fourrage ramassé par ces jupes (13) est transmis d'un tambour à l'autre et est déposé latéralement à la machine sous la forme d'un andain. Ladite transmission est améliorée à l'aide d'entraîneurs (18) fixés sur les parois (12) des tambours (7 à 10). Ces entraîneurs (18) empêchent également le passage de fourrage entre les tambours (7 à 10).

Ces entraîneurs (18) sont disposés sur plusieurs niveaux. Les tambours (7 et 8) les plus proches de l'andain peuvent en comporter plus que les autres tambours (9 et 10) vu que le volume de fourrage qu'ils déplacent est plus important.

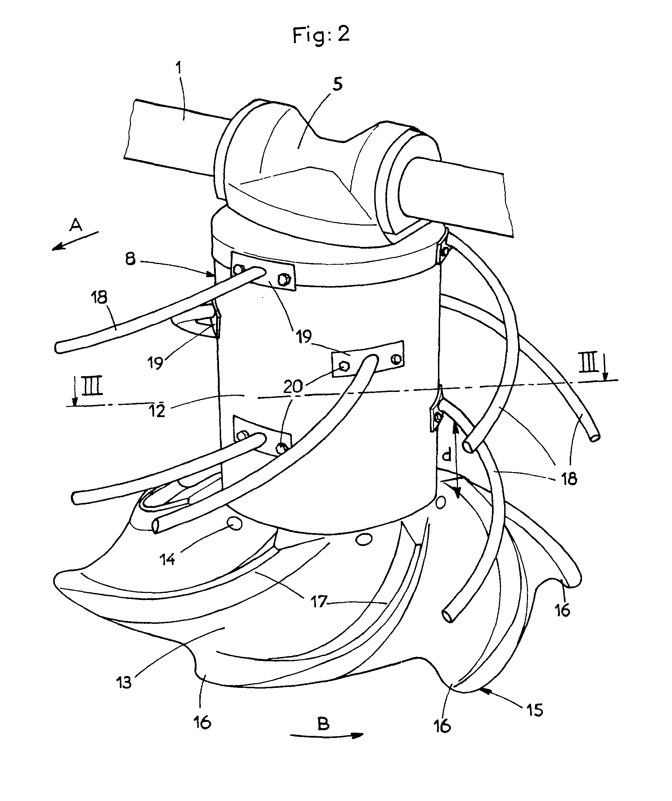

Conformément à une importante caractéristique de l'invention au moins les entraîneurs (18) les plus rapprochés des jupes (13) sont sensiblement parallèles à ces jupes (13) (voir figure 2). L'espace entre ces entraîneurs (18) et les jupes (13) est ainsi relativement constant. Par ailleurs, la distance (d) entre les entraîneurs (18) les plus rapprochés des jupes (13) et ces jupes (13) est égale ou supérieure à 5 centimètres. De très bons résultats ont été obtenus avec des machines sur lesquelles ladite distance (d) était comprise entre 5 et 14 centimètres. Grâce à cet espace entre les jupes (13) et les entraîneurs (18) du niveau inférieur, ces derniers ne coincent pas le fourrage. En sus, ils ne touchent ni les jupes (13), ni le sol durant le travail.

Les entraîneurs (18) sont constitués par des segments en forme d'arc de cercle, dirigés à la fois vers le bas et vers le sens opposé au sens de rotation (B) des tambours (7 à 10). Durant le travail ils poussent le fourrage vers les jupes (13) et se dégagent facilement de ce fourrage sur la partie latérale des tambours (7 à 10).

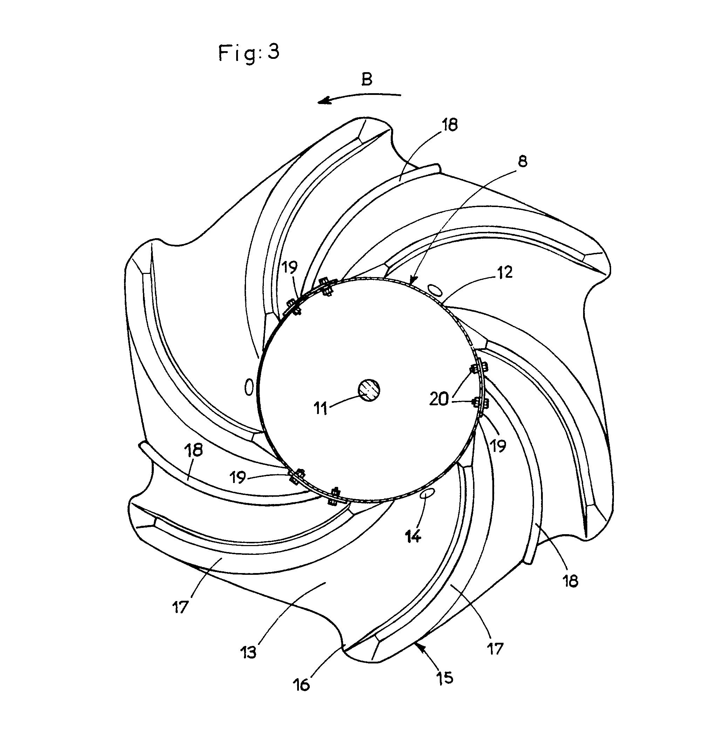

Comme cela ressort de la figure 3, la cambrure des entraîneurs (18) est sensiblement identique à celle des nervures (17) de la face supérieure des jupes (13). Le fourrage est ainsi déplacé de la même manière par les nervures (17) et les entraîneurs (18). De ce fait, on évite un entraînement plus ou moins rapide par l'un ou l'autre de ces éléments, ce qui nuirait au bon déplacement du fourrage.

Lesdits entraîneurs (18) s'étendent vers l'extérieur au moins sensiblement aussi loin que les bords extérieurs (15) des jupes (13) des tambours (7 à 10). Cette caractéristique assure une évacuation immédiate du fourrage et empêche toute accumulation sur la partie avant des tambours (7 à 10).

La disposition de ces entraîneurs (18) sur les parois (12) des tambours (7 à 10) est faite de manière à obtenir un mouvement continu du fourrage. Un tel déplacement permet la réalisation d'un andain de volume régulier. A cet effet, les entraîneurs (18) les plus rapprochés des jupes (13) se situent sensiblement au milieu de deux nervures (17) voisines. En sus, d'un niveau à l'autre, les entraîneurs (18) sont décalés d'environ la moitié de l'intervalle entre deux entraîneurs (18) voisins. Cette disposition ressort clairement des figures 2 et 3.

Les entraîneurs (18) possèdent avantageusement une section circulaire afin qu'ils n'accrochent pas le fourrage. Ils peuvent par exemple être réalisés en acier ou en matière plastique. Ils comportent à leur extrémité intérieure une plaque (19) légèrement courbée pour la fixation sur les parois (12) des tambours (7 à 10). Cette fixation peut être réalisée au moyen de boulons (20) permettant un démontage rapide des entraîneurs (18) en vue de leur remplacement en cas de détérioration.

Il est bien évident que le nombre de tambours équipés d'entraîneurs (18) tels que décrits ci-dessus, peut varier sans pour autant sortir du cadre de l'invention. De même, le ou les tambours peuvent être placés à l'avant ou à l'arrière du tracteur d'entraînement. Ils peuvent également être utilisés pour réduire la largeur d'un andain ou pour déplacer un andain en combinaison ou non avec d'autres appareils tels que des faucheuses, faucheusesconditionneuses ou ensileuses.

**Revendications**

1. Machine de fenaison pour l'andainage de fourrage ou le déplacement d'andains ou le fanage, comportant au moins un tambour (7 à 10) entraîné en rotation autour d'un axe (11) sensiblement vertical ou incliné, lequel tambour porte à sa base, pour la préhension du fourrage, une jupe souple (13) de forme tronconique dont la face supérieure est munie de nervures courbes (17), et comporte sur sa périphérie des entraîneurs (18) recourbés dans le même sens que les nervures (17) et qui coopèrent avec la jupe (13) en vue du déplacement du fourrage, lesdits entraîneurs étant fixés rigidement sur sa paroi (12) et étant disposés sur plusieurs niveaux, caractérisée par le fait qu'au moins les entraîneurs (18) les plus rapprochés de la jupe (13) sont sensiblement parallèles à cette jupe (13) durant le fonctionnement et que la cambrure de ces entraîneurs (18) est sensiblement identique à celle des nervures (17).

2. Machine selon la revendication 1, caractérisée par le fait que les entraîneurs (18) ont une section circulaire.

3. Machine selon la revendication 1 ou 2, caractérisée par le fait que chaque entraîneur (18) comporte une plaque de fixation (19) courbée de manière à épouser la forme du tambour (7 à 10).

**Patentansprüche**

1. Heuwerbungsmaschine zum Schwaden von Futter oder zum Versetzen von Schwaden oder zum Zetten-Wenden, die mindestens eine Trommel (7 bis 10) aufweist, die in Drehung um eine annähernd senkrechte oder geneigte Achse (11) angetrieben wird, welche Trommel an ihrer Basis für das ergreifen des Futters einen kegelstumpfartigen biegsamen Ringkragen (13) trägt, dessen Oberfläche mit gebogenen Rippen (17) versehen ist, und auf ihrem Umfang Mitnehmer (18) besitzt, die in die gleiche Richtung gebogen sind wie die Rippen (17) und die zur Förderung des Futters mit dem Ringkragen (13) zusammenarbeiten, welche Mitnehmer starr an ihrer Wandung (12) und in mehreren Ebenen angebracht sind, dadurch gekennzeichnet, dass mindestens die Mitnehmer (18) die dem Ringkragen (13) am nächsten angeordnet sind während des Betriebs annähernd parallel zu diesem Ringkragen (13) stehen und dass die Krümmung dieser Mitnehmer (18) annähernd gleich der Krümmung der Rippen (17) ist.

2. Maschine nach Anspruch 1, dadurch gekennzeichnet, dass die Mitnehmer (18) einen Kreisschnitt aufweisen.

3. Maschine nach Anspruch 1 oder 2, dadurch gekennzeichnet, dass jeder Mitnehmer (18) eine Befestigungsplatte (19) aufweist, die derart gebogen ist dass sie sich der Form der Trommel (7 bis 10) anpasst.

**Claims**

1. A machine for forming swaths of crop or for turning the swaths or for tedding, including at least one drum (7 to 10) driven in rotation around a substantially vertical or inclined axis (11), said drum having on its base for grasping the crop a flexible skirt (13), in the shape of a truncated cone, which is equipped with curved ribs (17) on its upper face and said drum includes on its circumference spines (18) curved in the same direction as the ribs, and which cooperate with the skirt (13) in order to move the crop, said spines being rigidly fixed on its wall (12) and being arranged on several levels, characterized in that at least the spines (18), the closest to the skirt (13), are substantially parallel with the skirt (13) during operation, and in that the curvature of these spines (18) is substantially identical to that of the ribs (17).

2. Machine according to claim 1, characterized in that the spines (18) have a circular section.

3. Machine according to claim 1 or 2, characterized in that each spine (18) comprises a fixing plate curved so that it assumes the form of the drum (7 to 10).

Fig: 1

EP 0 100 292 B1

Fig: 2

Fig: 3